# EUROPÄISCHE PATENTSCHRIFT

(11) **EP 2 554 932 B1**
(45) Veröffentlichungstag und Bekanntmachung des Hinweises auf die Patenterteilung: **08.07.2015**
(21) Anmeldenummer: 12005436.6
(22) Anmeldetag: 26.07.2012
(51) Int. Cl.: F26B 3/24, F26B 11/04, F26B 23/10, F26B 25/16, F27B 7/08, F27B 7/16

(54) **Rohrreaktor zur thermischen Behandlung von Biomasse**
Tube reactor for thermal treatment of biomass
Réacteur tubulaire pour le traitement thermique de biomasse

(30) Priorität: 05.08.2011 AT 11332011
(43) Veröffentlichungstag der Anmeldung: 06.02.2013
(73) Patentinhaber: Andritz AG, 8045 Graz (AT)
(72) Erfinder: Trattner, Klaus, 8045 Graz (AT); Pauli, Heinrich, 8010 Graz (AT); Plienegger, Wolfgang, 8102 Semriach (AT); Janisch, Wolfgang, 8010 Graz (AT)
(74) Vertreter: Schweinzer, Friedrich

(56) Entgegenhaltungen:
- JP-A- 60 248 224
- SU-A2- 792 052
- US-A- 2 936 220
- US-A- 4 393 603
- US-A- 4 753 019

## Beschreibung

Die Erfindung betrifft einen Rohrreaktor zur thermischen Behandlung von Biomasse mit einem rotierenden Reaktorraum, wobei der Reaktorraum durch ringförmige Bleche in Zonen unterteilt ist.

Derartige Reaktoren sind auch als beheizte Trommelreaktoren bekannt. Bei der thermischen Behandlung von Biomasse, z.B. Torrefizierung, ist neben der Steuerung und Kontrolle der Prozesstemperatur für eine gleichmäßige Behandlung auch eine Steuerung der Verweilzeit im Rohrreaktor erforderlich. Die Verweilzeitverteilung sollte zur Erreichung eines möglichst gleichförmigen Produktes möglichst eng sein. Bei bekannten Trommelreaktoren ist das Verweilzeitspektrum je nach Länge und Drehzahl jedoch sehr breit. In der US 4,753,019 A wird eine Trommel in zwei Bereiche geteilt, wobei einer der Erwärmung des Materials dient. Auch hier ist eine gleichmäßige Verweilzeit in der Trommel nicht erreichbar. Die SU 792052 beschreibt einen Reaktor mit Blechen (Platten 5 und 10) zur Verteilung der Wärme eines Produktes auf die Reaktorwand. Diese Vorrichtung hat keinerlei Einfluss auf die Verweilzeit des Produktes und somit auch nicht auf die Verteilung.

Ziel der Erfindung ist es daher einen Trommel- oder Rohrreaktor zur Verfügung zu stellen, der ein möglichst gleichförmiges Produkt erzeugt.

Durch die durch ringförmige Bleche unterteilten Zonen werden die Partikel in einem bestimmten Bereich zurückgehalten und dort durchmischt, d.h. es erfolgt eine Vergleichmäßigung der behandelten Partikel. Erst bei Erreichen des inneren Umfangs des ringförmigen Bleches kann Material (können Partikel) in die nächste Kammer oder am Ende ausgetragen werden.

Die Erfindung ist dadurch gekennzeichnet, dass an mindestens einem Blech ein Förderwerkzeug befestigt ist, wobei das Förderwerkzeug mechanisch verstellbar sein kann. Dadurch wird das Material gleichmäßig in Abhängigkeit der Reaktordrehzahl in die nächste Kammer gefördert und somit auch die Verweilzeit aller Partikel in der Kammer vergleichmäßigt.

Werden zumindest an einem Blech Förderwerkzeuge für unterschiedliche Drehrichtungen vorgesehen, so fördern diese Material oder sie fördern kein Material, je nach Drehrichtung. Damit ist ein beschleunigtes Entleeren des Reaktors durch einen Drehrichtungswechsel möglich. Es werden somit Anbackungen und/oder Überhitzungen der Partikel bei Stillsetzung des Reaktors vermieden.

Eine günstige Weiterbildung der Erfindung ist dadurch gekennzeichnet, dass am Reaktor-Innentrommel-Mantel eine Förderspirale vorgesehen ist. Durch eine derartige Förderspirale, vorzugsweise mit geringer Höhe, wird eine vollständige Entleerung des Reaktors ermöglicht. Bei Rotation in die der Betriebsdrehrichtung entgegengesetzte Richtung trägt diese Spirale zur zusätzlichen Vermischung innerhalb einer Zone bei.

Eine günstige Ausgestaltung der Erfindung ist dadurch gekennzeichnet, dass im Reaktorraum in Längs(Achs-)richtung verlaufende Heizrohre vorgesehen sind, wobei die Heizrohre in mehreren Ringreihen, vorzugsweise zwei Ringreihen, am Reaktor-Innentrommel-Mantel angeordnet sein können. Durch diese Rohre, durch die ein Heizmedium, z.B. Rauchgas, geleitet wird, wird einerseits eine gleichmäßige Erwärmung und andererseits auch eine gute Durchmischung der Partikel erreicht.

Wird der rotierende Reaktorraum von einer Reaktor-Außentrommel umgeben und zwischen rotierendem Reaktorraum und Reaktor-Außentrommel ein Ringspalt vorgesehen, wobei die Reaktor-Außentrommel mit dem Reaktorraum rotieren kann, so wird eine noch bessere Erwärmung der Partikel bei einer großen Übertragungsfläche ermöglicht.

Die Erfindung wird nun anhand der Zeichnungen beispielhaft beschrieben, wobei
Fig. 1 eine 3-D Ansicht eines erfindungsgemäßen Rohrreaktors,
Fig. 2 eine schematische Darstellung eines erfindungsgemäßen Rohrreaktors und
Fig. 3 einen Schnitt gemäß Linie III-III in Fig. 2
darstellt.

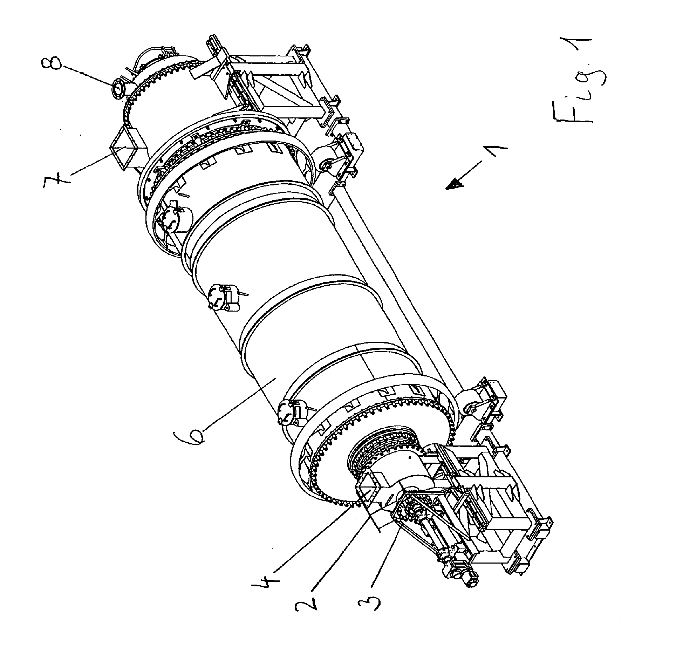

In Fig. 1 ist ein erfindungsgemäßer Rohreaktor dargestellt. Dieser ist als indirekt beheizter Trommelreaktor 1 ausgeführt. Die zu behandelnde Biomasse z.B. Hackschnitzel, wird über einen Eintragsflansch 2 einer beheizten Eintragsschnecke 3 und von dieser in den rotierenden Reaktorraum (hier nicht sichtbar) zugeführt. Das Heizmedium, hier Rauchgas, wird mit einer Temperatur von ca. 360 - 450 °C über den Anschluss 4 in den Reaktorraum und in den Zwischenraum zwischen Reaktorraum und Reaktor-Außentrommel 6 eingebracht. Zur Abdichtung gegenüber Atmosphäre werden vor und nach dem Reaktor bzw. Kühlschnecke Zellradschleusen verwendet.

Das abgekühlte Heizmedium, hier Rauchgas, tritt dann mit einer Temperatur von ca. 280 - 300 °C über den Anschluss 7 aus dem Trommelreaktor 1 aus. Das durch die thermische Behandlung erzeugte Gas tritt beim Stutzen 8 aus. Wird der Reaktor zur Torrefizierung verwendet, tritt hier das Torrefikationsgas aus.

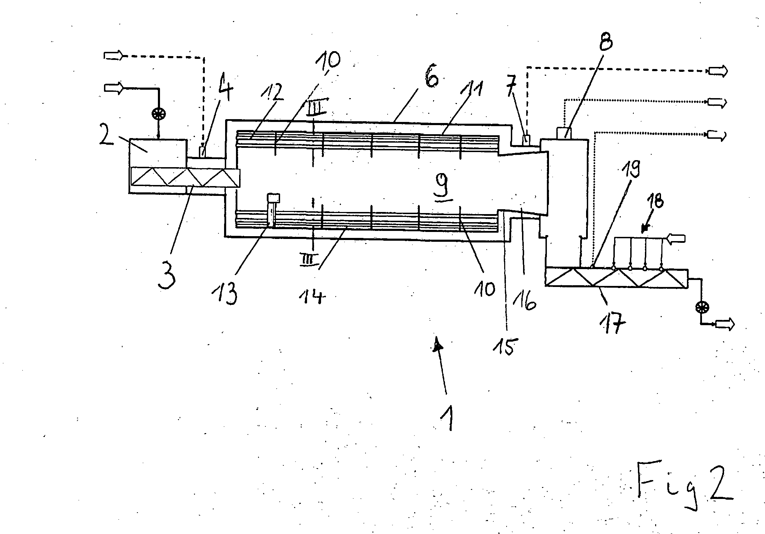

Fig. 2 zeigt nun schematisch den Aufbau des erfindungsgemäßen Rohrreaktors anhand dessen die Funktionsweise beschrieben werden soll. Der Reaktorraum 9 des Trommelreaktors 1 ist durch ringförmige Zonenbleche 10 in mehrere Zonen eingeteilt um die axiale Vermischung gering zu halten. Im Reaktorraum 9 wird dem Eingangsmaterial über die durch Rauchgas beheizte Reaktor-Innentrommel 11 und die durch Rauchgas beheizten Heizrohre 12 Wärme zugeführt. Die Prozesstemperatur beträgt dabei ca. 280 - 300 °C. Die einzelnen Zonenbleche 10 sind mit mindestens einem Förderwerkzeug 13 je Zonenblech 10 bestückt. Die Förderwerkzeuge 13 fördern abhängig von der Reaktordrehzahl und der Ausführung mehr oder weniger an Material über die Zonenbleche 10 in Richtung Reaktoraustritt 15. Die Drehzahl beträgt dabei ca. 8 bis 20 U/min.

Die Förderwerkzeuge 13 werden in besonderer Weise ausgestaltet um in Abhängigkeit von der Drehrichtung Material zu fördern oder kein Material zu fördern. Dazu werden zusätzlich vorzugsweise mehrere Förderwerkzeuge 13' montiert, die nur bei Drehung entgegen der Betriebsdrehrichtung Material fördern. Damit ist durch einen Drehrichtungswechsel ein beschleunigtes Entleeren des Reaktors möglich und es kann zu keinen Anbackungen und auch keinen Materialüberhitzungen kommen. So wird auch verhindert, dass ein Brand entsteht.

Zusätzlich zu den Förderwerkzeugen 13, 13' ist am Reaktor-Innentrommel-Mantel 11 eine Förderspirale 14 mit geringer Höhe angebracht, welche die vollständige Entleerung des Reaktors bei einer Drehrichtung ermöglicht. Bei Rotation in die entgegengesetzte Drehrichtung bewirkt diese Spirale eine zusätzliche Vermischung innerhalb einer Zone. Innerhalb einer Zone stellt sich entsprechend der Förderleistung der Förderwerkzeuge 13 ein bestimmter Füllgrad ein. Die Verweilzeit des Materials im Rohrreaktor 1 beträgt ca. 20 bis 40 min.

Am Reaktoraustritt 15 ist ein konisches Rohrstück 16 angebracht durch welches unabhängig von der Drehzahl Material in Richtung Kühlschnecke 17 gefördert wird.

In der Kühlschnecke 17 wird über ein Düsensystem 18, welches aus mehreren Düsen aufgebaut ist, feinst verstäubtes Wasser auf das heiße Produkt aufgesprüht. Die Wassermenge wird über Zu- und Wegschalten von einzelnen Düsen geregelt. Als Leitgröße wird eine Temperaturmessung am Schneckenmantel verwendet. Der entstehende Wasserdampf wird über den Anschluss 8 gemeinsam mit dem Torrefikationsgas oder über einen zusätzlichen Anschluss 19 abgezogen.

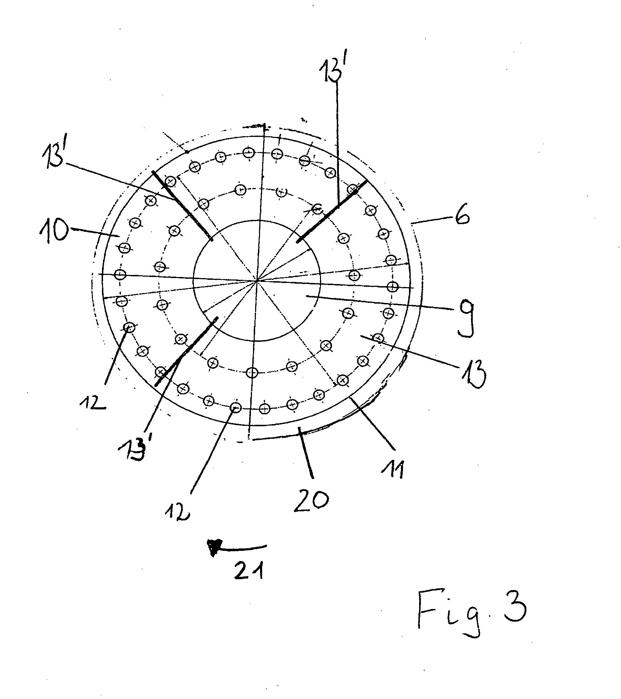

Fig. 3 zeigt einen Schnitt durch Fig. 2 entlang der Linie III-III in Blickrichtung auf den Reaktoreintritt. Man erkennt das Zonenblech 10 mit den Heizrohren 12, die hier beispielhaft in zwei Reihen angeordnet sind, aber auch eine oder mehrere Reihen sein können. Zwischen dem Reaktor-Innentrommel-Mantel 11 und der Reaktor-Außentrommel 6 befindet sich ein Ringraum 20, durch den hier beispielhaft das Rauchgas geführt wird. Dadurch wird der Reaktor-Innentrommel-Mantel 11 erwärmt und vergrößert somit die Wärmeübertragungsfläche. Weiters kann man das Förderwerkzeug 13 erkennen, das in Betriebsdrehrichtung 21 das Material in Richtung Reaktoraustritt 15 fördert. Es können allerdings auch mehrere derartige Förderwerkzeuge vorgesehen sein. Zur schnellen Entleerung wird die Drehrichtung umgekehrt und die Förderwerkzeuge 13' (hier drei dargestellt) fördern das Material schnell und vollständig aus der jeweiligen Zone hinaus. Es können auch hier mehr Förderwerkzeuge vorgesehen sein, wobei jedoch die Anzahl der Förderwerkzeuge 13' zur Entleerung stets (wesentlich) größer als die Förderwerkzeuge 13 zur Verweilzeitsteuerung bei normalem Betrieb sein muss.

## Patentansprüche

1. Rohrreaktor zur thermischen Behandlung von Biomasse mit einem rotierenden Reaktorraum (9), wobei der Reaktorraum (9) durch ringförmige Bleche (10) in Zonen unterteilt ist, **dadurch gekennzeichnet, dass** an mindestens einem Blech (10) ein Förderwerkzeug (13, 13') befestigt ist.

2. Rohrreaktor nach Anspruch 1, **dadurch gekennzeichnet, dass** das Förderwerkzeug (13, 13') mechanisch verstellbar ist.

3. Rohrreaktor nach einem der Ansprüche 1 oder 2, **dadurch gekennzeichnet, dass** zumindest an einem Blech (10) Förderwerkzeuge (13, 13') für unterschiedliche Drehrichtungen vorgesehen sind.

4. Rohrreaktor nach einem der Ansprüche 1 bis 3, **dadurch gekennzeichnet, dass** am Reaktor-Innentrommel-Mantel (11) eine Förderspirale (14) vorgesehen ist.

5. Rohrreaktor nach einem der Ansprüche 1 bis 4, **dadurch gekennzeichnet, dass** im Reaktorraum (9) in Längs(Achs-)richtung verlaufende Heizrohre (12) vorgesehen sind.

6. Rohrreaktor nach Anspruch 5, **dadurch gekennzeichnet, dass** die Heizrohre (12) in mehreren Ringreihen, vorzugsweise zwei Ringreihen, am Reaktor-Innentrommel-Mantel (11) angeordnet sind.

7. Rohrreaktor, nach einem der Ansprüche 1 bis 6, **dadurch gekennzeichnet, dass** der rotierende Reaktorraum (9) von einer Reaktor-Außentrommel (6) umgeben und zwischen rotierendem Reaktorraum (9) und Reaktor-Außentrommel (6) ein Ringraum (20) vorgesehen ist.

8. Rohrreaktor nach Anspruch 7, **dadurch gekennzeichnet, dass** die Reaktor-Außentrommel (6) mit dem Reaktorraum (9) mitrotiert.

## Claims

1. Tubular reactor for thermal treatment of biomass with a rotating reactor chamber (9), where the reactor chamber (9) is subdivided into zones by means of ring-shaped plates (10), **characterized by** at least one plate (10) having a conveying tool (13, 13') secured to it.

2. Tubular reactor according to Claim 1, **characterized by** the conveying tool (13, 13') being mechanically adjustable.

3. Tubular reactor according to one of Claims 1 or 2, **characterized by** conveying tools (13, 13') for different directions of rotation being provided on at least one plate (10).

4. Tubular reactor according to one of Claims 1 to 3, **characterized by** a conveying spiral (14) being provided on the shell (11) of the reactor's inner drum.

5. Tubular reactor according to one of Claims 1 to 4, **characterized by** heating tubes (12) being arranged in longitudinal (axial) direction in the reactor chamber (9).

6. Tubular reactor according to Claim 5, **characterized by** the heating tubes (12) being arranged in several circular rows, preferably two circular rows, on the reactor's inner drum shell (11).

7. Tubular reactor according to one of Claims 1 to 6, **characterized by** the rotating reactor chamber (9) being enclosed in an outer reactor drum (6) and an annular gap (20) being provided between the rotating reactor chamber (9) and the outer reactor drum (6).

8. Tubular reactor according to Claim 7, **characterized by** the outer reactor drum (6) rotating together with the reactor chamber (9).

## Revendications

1. Réacteur tubulaire pour le traitement thermique de biomasse, avec une chambre rotative (9) de réacteur, où la chambre (9) du réacteur est subdivisée en zones moyennant des tôles (10) en forme annulaire, **caractérisé en ce qu'**à au moins une des tôles (10) un dispositif de convoyage (13, 13') est rattaché.

2. Réacteur tubulaire selon la revendication 1, **caractérisé en ce que** le dispositif de convoyage (13,13') est mécaniquement ajustable.

3. Réacteur tubulaire selon l'une des revendications 1 ou 2, **caractérisé en ce que** des dispositifs de convoyage (13, 13') sont prévus sur au moins une tôle (10) pour de différentes directions de rotation.

4. Réacteur tubulaire selon l'une des revendications 1 à 3, **caractérisé en ce qu'**une volute de convoyage (14) est prévue à la chemise (11) du tambour intérieur du réacteur.

5. Réacteur tubulaire selon l'une des revendications 1 à 4, **caractérisé en ce que** des tuyaux de chauffage (12) sont prévus dans la chambre (9) du réacteur s'étendant en sens longitudinal (axial).

6. Réacteur tubulaire selon la revendication 5, **caractérisé en ce que** les tuyaux de chauffage (12) sont disposés en plusieurs rangés circulaires, de préférence deux rangés circulaires à la chemise (11) du tambour intérieur du réacteur.

7. Réacteur tubulaire selon l'une des revendications 1 à 6, **caractérisé en ce que** la chambre rotative (9) du réacteur est entourée par un tambour extérieur (6) de réacteur et qu'un espace circulaire (20) est prévu entre la chambre rotative (9) du réacteur et le tambour extérieur (6) de réacteur.

8. Réacteur tubulaire selon la revendication 7, **caractérisé en ce que** le tambour extérieur (6) du réacteur tourne ensemble avec la chambre (9) du réacteur.
